# EUROPEAN PATENT SPECIFICATION

(11) **EP 2 086 171 B1**
(45) Date of publication and mention of the grant of the patent: **18.03.2015**
(21) Application number: 07855899.6
(22) Date of filing: 29.12.2007
(51) Int. Cl.: H04L 12/911

(54) **METHOD, DEVICE AND SYSTEM FOR IMPLEMENTING FLOW GROUP QoS CONTROL IN NGN NETWORK**
VERFAHREN, VORRICHTUNG UND SYSTEM ZUR DIENSTGÜTE-STEUERUNG VON DATENFLUSS-GRUPPEN IN EINEM NEXT GENERATION NETZWERK
PROCÉDÉ, DISPOSITIF ET SYSTÈME D'IMPLÉMENTATION DE CONTRÔLE QOS D'UN GROUPE DE FLUX

(30) Priority: 09.01.2007 CN 200710001243
(43) Date of publication of application: 05.08.2009
(60) Divisional application: 14193257.4
(73) Proprietor: Huawei Technologies Co., Ltd., Shenzhen, Guangdong Province 518129 (CN)
(72) Inventor: WANG, Haifeng, Shenzhen Guangdong 518129 (CN); QIU, Jingzhong, Shenzhen Guangdong 518129 (CN); QIAO, Shaohu, Shenzhen Guangdong 518129 (CN); XUE, Lili, Shenzhen Guangdong 518129 (CN)
(74) Representative: Thun, Clemens
(86) International application number: PCT/CN2007/003899
(87) International publication number: WO 2008/083558

(56) References cited:
- CN-A- 1 863 149
- CN-A- 1 866 955
- CN-A- 1 874 259
- US-A1- 2004 013 089
- US-A1- 2004 248 583
- US-A1- 2005 149 754
- US-A1- 2006 045 128
- US-A1- 2006 221 828
- US-B1- 6 988 133
- DONG SUN LUCENT TECHNOLOGIES USA: "Draft Recommendation Y.RACF Version 9.3; TD 109", ITU-T DRAFT STUDY PERIOD 2005-2008, INTERNATIONAL TELECOMMUNICATION UNION, GENEVA ; CH, vol. STUDY GROUP 13, 17 July 2006 (2006-07-17), pages 1-74, XP017410385,

## Description

### Field of the Invention

The present invention relates to communication technologies, and in particular, to a method, device and system for implementing flow group Quality of Service (QoS) control in a Next Generation Network (NGN).

### Background of the Invention

The development trend of telecom networks is to provide various services on packet-based IP platforms. With the emergence of the NGN, this trend is increasingly evident. Thus, the industry has an urgent demand for the international NGN standards, and many international organizations are engaged in this subject. The International Telecommunications Union (ITU) defined the NGN clearly in 2004: "An NGN is a packet-based network able to provide services including telecommunication services and able to make use of multiple broadband, QoS-enabled transport technologies to separate service-related functions from underlying transport-related technologies. It offers unrestricted access by users to different service provider networks, and supports generalized mobility which will provide consistency and unity of services using to users."

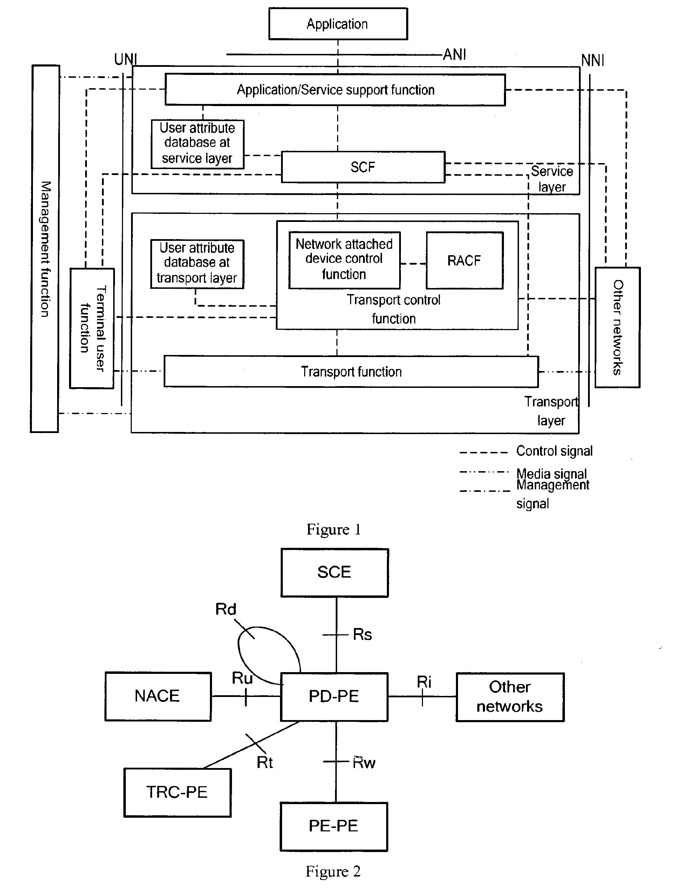

Later, the ITU proposed the NGN architecture as shown in Figure 1. The entire NGN mainly includes a transport layer and a service layer. The transport layer includes the access transport function, core transport function, and transport control function (which further includes network attached device control function, resource and admission control function, and user attribute database at the transport layer). The service layer includes the service control function, user attribute database at the service layer, and application/service support function, and accesses applications through Application Network Interfaces (ANIs). In addition, the transport layer and the service layer interact with terminal users through User Network Interfaces (UNIs) and communicate with other networks through Network-Network Interfaces (NNIs).

Based on the separation of service and transport and the separation of control and bearer, the communication at any layer of the NGN must be implemented through standard interfaces. Therefore, the ITU proposed several drafts to define the standard interfaces among the function entities. Taking the architecture of the QoS resource control part in Figure 1 as an example, the service layer is driven by services; the Service Control Entity (SCE) in the Service Control Function (SCF) controls the Policy Decision Physical Entity (PD-PE) in the Resource and Admission Control Function (RACF) at the transport layer through the standard Rs interface, requests transport resources from the transport layer, and receives information including address mapping information and transport resource usage reports from the transport layer to implement communication between the service layer and the transport layer, as shown in Figure 2.

The PD-PE that receives a request from the SCE controls the reservation of resources, makes decisions based on the requested resources and configured policies, and sends the media and session information to the Transport Resource Control Physical Entity (TRC-PE) through the Rt interface to request transport resources. The TRC-PE decides whether to permit the requested resource access based on the maintained network status and transport policies, and reports the decision result to the PD-PE. Finally, the PD-PE sends the policy information to the Policy Enforcement Physical Entity (PE-PE) through the Rw interface, and the PE-PE transports the media flows. In this way, policy-based QoS control is implemented in the NGN. Figure 2 also shows the Network Access Control Entity (NACE) which interacts with the PD-PE through the Ru interface.

In actual applications, the SCE, upon receipt of a session setup request, generates a media content description information according to the Session Description Information (SDI) from a terminal, breaks down each media flow to one or multiple IP flows, and then sends a media flow information and IP flow information to the PD-PE through the Rs interface to request the resource authorization for this session. After receiving the information from the SCE, the PD-PE works with the TRC-PE to reserve the transport resources based on the flow type and bandwidth information sent by the SCE and the local QoS policy. If resource reservation is successful, the PD-PE sends the authorized flow information to the PE-PE through the Rw interface based on the Common Open Policy Service (COPS) protocol. The PE-PE enables the specified transport channels to carry the media flows according to the related properties in the received flow information.

According to the Rs interface specifications formulated by the ITU, the Diameter protocol is used as the protocol on the Rs interface. The Diameter protocol uses a "flow" as the basic unit for policy description and introduces the concept of "Flow-Grouping AVP". In a resource reservation request sent by the SCE, the flow-grouping AVP designates a group of flows that are transported in the same IP bearer at the same transport layer. The QoS information described in the resource reservation request such as the bandwidth and packet size is specific to the flow group, that is, all flows in a flow group share the resources.

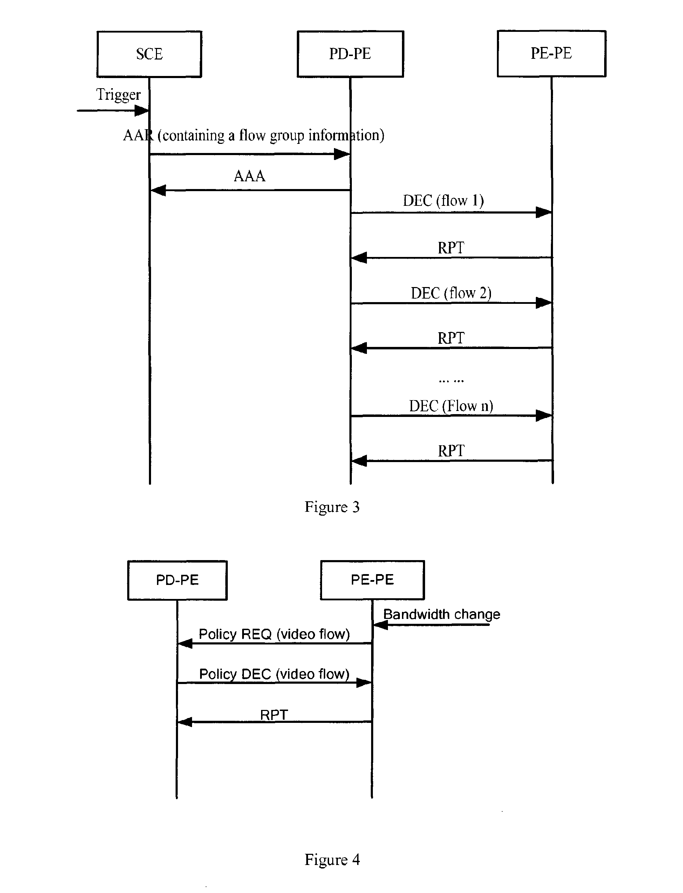

Because the Rw interface from the PD-PE to the PE-PE involves no "flow-grouping AVP" but "flows", as shown in Figure 3, the PD-PE must break down all flow groups into flows, and then generate the policies to be sent to the PE-PE for execution. The PD-PE never knows how many QoS resources should be allocated to each flow in a flow group. Therefore, when the request from the upper entity carries flow group descriptions, the PD-PE cannot generate a policy for each flow properly. Instead, the QoS resources of each flow are determined discretionarily according to private rules. As a result, the QoS of actual media flows cannot be guaranteed.

For example, the SDI between the user and the SCE specifies that audio and video flows use the same resource group. The SCE transforms the SDI into a flow group, puts the IP flows carrying audio and the IP flows carrying video into the same flow group, allocates 384 kbit/s bandwidth to this flow group, and sends the flow group to the PD-PE based on the Diameter protocol. The PD-PE may allocate 64 kbit/s bandwidth to audio flows and 320 kbit/s bandwidth to video flows, or 320 kbit/s bandwidth to audio flows and 64 kbit/s bandwidth to video flows, depending on the implementation policy of the PD-PE. Then the PD-PE sends the flow group to the lower layer bearer for execution. Obviously, the actual bandwidth is different from the bandwidth that users should obtain, and QoS control is not implemented.

For example, when multiple users access the NGN core network through an Integrated Access Device (IAD), multiple ports on the IAD control the transport and may use the same routing device in the packet-based network to transport IP flows. Based on the QoS policy of the core network, all IP flows transported by the ports may be encapsulated in the same flow group for QoS resource control and share the resources allocated to this flow group. In the prior art, the policy sent by the PD-PE is specific to flows. Therefore, if the sent policy specifies that each flow shares the flow group resources, the total resources may exceed those of the flow group; if the sent policy specifies that the flow group resources are evenly allocated to each flow, the actual maximum resources available for each flow may be less than the flow group resources, which does not meet the expectations of users. Such a QoS control method is neither reasonable nor flexible. In addition, presetting the resources of each flow cannot control the flow resources dynamically.

To address the above issues, the PE-PE at the transport layer detects the resource changes of each flow automatically in the prior art. When finding a flow needs more resources, the PE-PE requests a new QoS policy from the PD-PE through the Rw interface. After receiving the request of the PE-PE, the PD-PE adjusts its maintained resource information and sends a new policy for the specified flow to the PE-PE for execution. As shown in Figure 4, the flow group control is completely performed on the PD-PE, and the PE-PE only needs to execute the policy without judgment.

The above method can solve the problem to some extent. Obviously, however, this method increases the times of interactions between the upper and lower layers, increases the network load, and is less flexible, and in particular, when the resources required by the lower layer flows are changing continuously at a specified time point, control messages are increased in the core network and the stability of the network with limited resources is affected.

Patent application No. US2004/013089 A1 discloses a method and apparatus for admission control in a communication system. An Access Network (AN) element determines available resources. When available resources are sufficient to support the requirements of a requested application flow, the AN admits the application flow. The AN periodically, and on trigger events, updates a measure of available resources. The admission control may operate in coordination with a scheduler applying a compensation factor to each flow type, and a compensation factor for aggregate flows of a given user. (see the Abstract).

Patent application No. US 2006/045128 A1 disclose methods, and Packet Data Service Node (PDSN) and a Base Station Controller (BSC) of a Code-Division Multiple Access 2000 (CDMA2000) network for exchanging Generic Routing Encapsulation (GRE) frames that contain downlink IP packets, wherein the frames also contain an identity of the IP flows on which they are to be mapped. The PDSN receives IP data packets destined to an IP address, identifies an IP flow on which the IP packets are to be mapped, encapsulates the IP data packets in GRE frames, and adds to each one of the GRE frames the IP flow Id on which the IP packets are to be mapped. The BSC receives GRE frames, identifies the identity of the IP flow in the GRE frames, determines the Quality of Service (QoS) associated with the identified IP flow, and acts to enforce the determined QoS for the identified IP flow. (see the Abstract).

Patent application No. US 2004/248583 A1 discloses a resource allocation system for a network, the system including a traffic shaper operative to decompose a network stream into a plurality of flows, each flow representing a service or application on a network down-link, and shape network traffic by allocating a different bandwidth and delay to each flow, and a policy processor operative to control the traffic shaper and dynamically allocate at least one air interface resource to at least one network device in association with at least one of the flows.

The title of Draft Recommendation Y.RACF Version 9.3 specifies the functional architecture and requirements for the Resource and Admission Control Functions(RACF) in Next Generation Networks(NGNs), which may involve a variety of access and core transport technologies and multiple domains. The RACF provides realtime application-driven and policy-based transport resource management in support of end-to-end Quality of Service (QoS), gate control, network address translation, and traversal of remote network address translators. The RACF is not service-specific. Both IMS and non-IMS services can make use of the RACF

.

### Summary of the Invention

An embodiment of the present invention provides a method, device, and system for implementing flow group QoS control in the NGN to implement QoS control and dynamic control of flow resources.

A method for implementing flow group QoS control in the NGN includes:
receiving, by a Policy Decision Physical Entity, PD-PE, a resource allocation request that carries a requested flow group information from a Service Control Entity, SCE through a Rs interface, wherein the requested flow group information is configured to identify the features of a flow group;
determining, by the PD-PE, according to the resource allocation request that carries the requested flow group information, QoS resources required by the flow group; and
generating and sending, by the PD-PE, a QoS policy of the flow group to a Policy Enforcement Physical Entity, PE-PE through a Rw interface, wherein the QoS policy of the flow group indicates that the QoS resources are shared by each flow in the flow group and comprises a decided flow group information and a QoS information of the flow group, and wherein the decided flow group information comprises a filter rule, filter status, and service type of each flow from the flow group,
so that the PE-PE allocates one or more bearers to one or more flows in the flow group according to the received QoS policy of the flow group and controls the resources occupied by the one or more bearers allocated to the one or more flows in the flow group to be less than the QoS resources required by the flow group, where the Rs interface is the interface between the SCE and the PD-PE, and the Rw interface is the interface between the PD-PE and the PE-PE.

A Policy Decision Physical Entity, PD-PE, used in a Next Generation Network, NGN, includes:
a receiving unit, configured to receive the resource allocation requests carrying a requested flow group information from a Service Control Entity, SCE through a Rs interface, wherein the requested flow group information is configured to identify the features of a flow group;
a processing unit, configured to determine, according to the received resource allocation request that carries the requested flow group information, Quality of Service, QoS, resources required by the flow group, and generate a QoS policy of the flow group, wherein the QoS policy of the flow group indicates that the QoS resources are shared by each flow in the flow group and comprises a decided flow group information and a QoS information of the flow group, and wherein the decided flow group information comprises a filter rule, filter status, and service type of each flow from the flow group; and
a sending unit, configured to send the QoS policy of the flow group to a Policy Enforcement Physical Entity, PE-PE through a Rw interface; where the Rs interface is the interface between the SCE and the PD-PE, and the Rw interface is the interface between the PD-PE and the PE-PE.

A Policy Enforcement Physical Entity, PE-PE, used in a Next Generation Network, NGN, includes:
a receiving unit, configured to receive a Quality of Service, QoS, policy of a flow group from a Policy Decision Physical Entity, PD-PE through a Rw interface, wherein the QoS policy of the flow group indicates that the QoS resources are shared by each flow in the flow group and comprises a decided flow group information and a QoS information of the flow group, and wherein the decided flow group information comprises a filter rule, filter status, and service type of each flow from the flow group; an executing unit, configured to allocate one or more bearers to one or more flows in the flow group according to the received QoS policy of the flow group; and
a controlling unit, configured to control the resources occupied by the one or more bearers allocated to the one or more flows in the flow group to be less than the QoS resources required by the flow group, where the Rw interface is the interface between the PD-PE and the PE-PE.

A network system includes:
the PD-PE and
the PE-PE.

According to an embodiment of the present invention, the PD-PE sends a QoS policy of the QoS resources shared by each flow in a flow group to the PE-PE through the Rw interface, and the PE-PE allocates bearer(s) to flow(s) in the flow group according to the received QoS policy. This realizes flow group QoS control in NGN systems.

According to an embodiment of the present invention, when allocating bearer(s) to flow(s) in the flow group, the PE-PE further automatically adjusts and controls the QoS resources allocated to each flow according to the QoS policy. In this way, when resources of each flow change, the PE-PE does not need to request a new policy from the PD-PE, thus reducing the redundant interactions for policy between the PE-PE and the PD-PE and making the control more flexible.

### Brief Description of the Drawings

Figure 1 shows the architecture of the NGN in the prior art;
Figure 2 shows the architecture of the resource control part in the NGN in the prior art;
Figure 3 is a flowchart for the exchange of flow group control information between the network entities in the prior art;
Figure 4 is a flowchart for the exchange of the control information between the PD-PE and the PE-PE in the prior art;
Figure 5 shows the architecture of the communication system according to an embodiment of the present invention;
Figure 6 shows the architecture of the COPS protocol model according to an embodiment of the present invention;
Figure 7 shows the architecture of the PIB tree of the COPS Usage for Policy Provisioning (COPS-PR) protocol according to an embodiment of the present invention;
Figure 8 is a schematic view of the filter rules of each flow according to an embodiment of the present invention;
Figure 9 shows the architecture of the flow group information according to an embodiment of the present invention;
Figure 10 shows the architecture of the flow group QoS information according to an embodiment of the present invention;
Figure 11 shows the architecture of the PIB that carries the QoS policy of a flow group according to an embodiment of the present invention;
Figure 12 shows the architecture of the PD-PE according to an embodiment of the present invention;
Figure 13 shows the architecture of the PE-PE according to an embodiment of the present invention;
Figure 14 is a flowchart for the exchange of flow group control messages among the network entities when the Rw interface uses the COPS-PR protocol as the bearer protocol according to an embodiment of the present invention; and
Figure 15 is a flowchart for the exchange of flow group control messages among the network entities when the Rw interface uses the H.248 protocol as the bearer protocol according to an embodiment of the present invention.

### Detailed Description of the Embodiments

According to embodiments of the present invention, a PD-PE sends a QoS policy of the QoS resources shared by each flow in a flow group to a PE-PE (or, simply, the flow group QoS policy) through the Rw interface; and the PE-PE allocates bearer(s) to flow(s) in the flow group according to the received QoS policy to implement the flow group QoS control in the NGN.

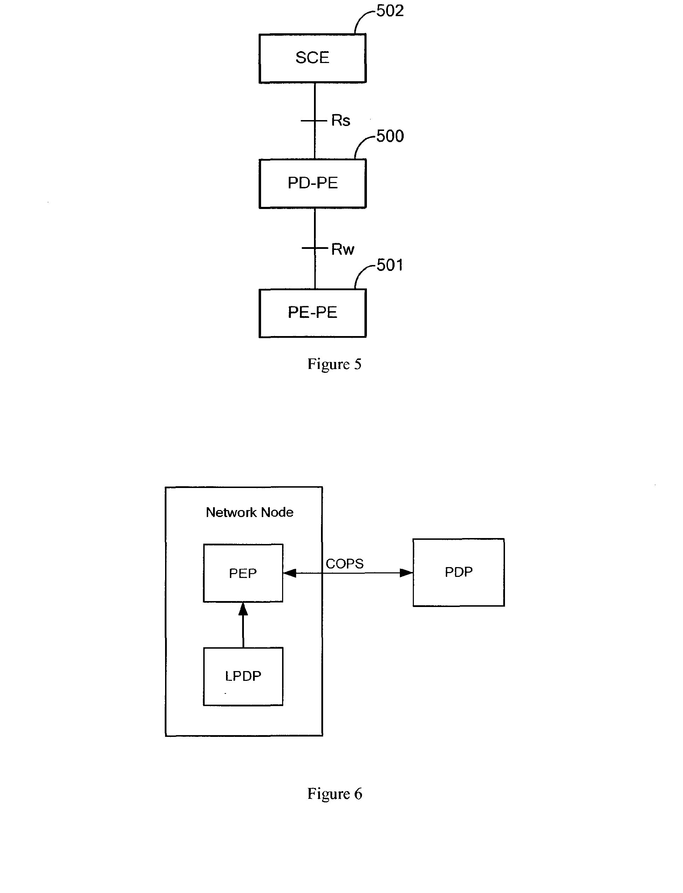

As shown in Figure 5, a communication system provided by an embodiment of the present invention includes: a PD-PE500 and a PE-PE501. The PD-PE500, located in the RACF at the transport layer, is configured to receive a resource allocation request carrying a flow group information, determine, according to the resource allocation request, the QoS resources required by the flow group, and send a QoS policy of the QoS resources shared by each flow in the flow group to the PE-PE501 through the Rw interface. The PE-PE501 is configured to allocate bearer(s) to flow(s) in the flow group, according to the received QoS policy. The PE-PE501 is further configured to control the resources occupied by the bearer(s) which are allocated to the flow(s) in the flow group to be less than the QoS resources of the flow group. Further, the communication system further includes an SCE502 which is located in the SCF at the service layer and configured to send the resource allocation request carrying the flow group information to the PD-PE500 through the Rs interface.

Multiple protocols can be used when the PD-PE500 sends a QoS policy of the QoS resources shared by each flow in the flow group through the Rw interface. An embodiment of the present invention takes the prevalent COPS protocol as an example.

The COPS protocol defines a transport mechanism for dynamic policy information exchange between a Policy Enforcement Point (PEP) and a Policy Decision Point (PDP). This protocol is based on the simple client/server model and uses TCP at the lower layer. Figure 6 shows the basic COPS model where a TCP connection is set up first, and then a COPS connection is set up between the PEP and the PDP. The PDP and the PEP exchange the policy information on the COPS connection.

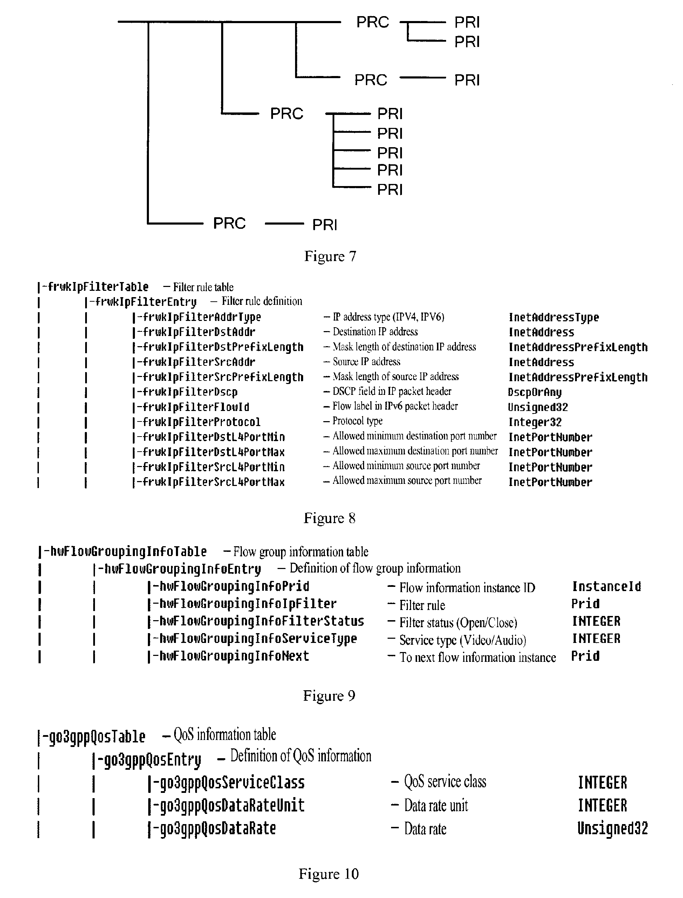

The COPS Usage for Policy Provisioning (COPS-PR) is an extended protocol based on the COPS. It uses a named data structure, Policy Information Base (PIB), to indicate the type and purpose of the policy information. As shown in Figure 7, the branches of the PIB tree are PRovisioning Classes (PRCs), and the leaves are PRovisioning Instances (PRIs). One PRC may correspond to multiple PRIs.

When the PD-PE500 sends the QoS policy of the QoS resources shared by each flow in the flow group to the PE-PE501, the actual policy information is carried in the PIB mode as defined in COPS-PR. The PIB carries the flow group information.

In the prior art, the information on each flow is contained in a policy delivery message and configured to identify the flow features. The information on each flow includes filter rules, filter status, and service type (video/audio). As shown in Figure 8, the filter rule references the frwkIpFilterTable of the Framework PIB in RFC3318.

According to an embodiment of the present invention, the flow group information is configured to identify the flow group features. As shown in Figure 9, the flow group information includes the filter rules, filter status, and service types of each flow and is contained in the PIB which carry the QoS policy.

The PIB further includes the flow group QoS information in order to realize that the PD-PE500 send a QoS policy of the QoS resources shared by each flow in the flow group to the PE-PE501. As shown in Figure 10, the flow group QoS information references the go3gppQosTable in the PIB on the Go interface defined in 3GPP TS29.207.

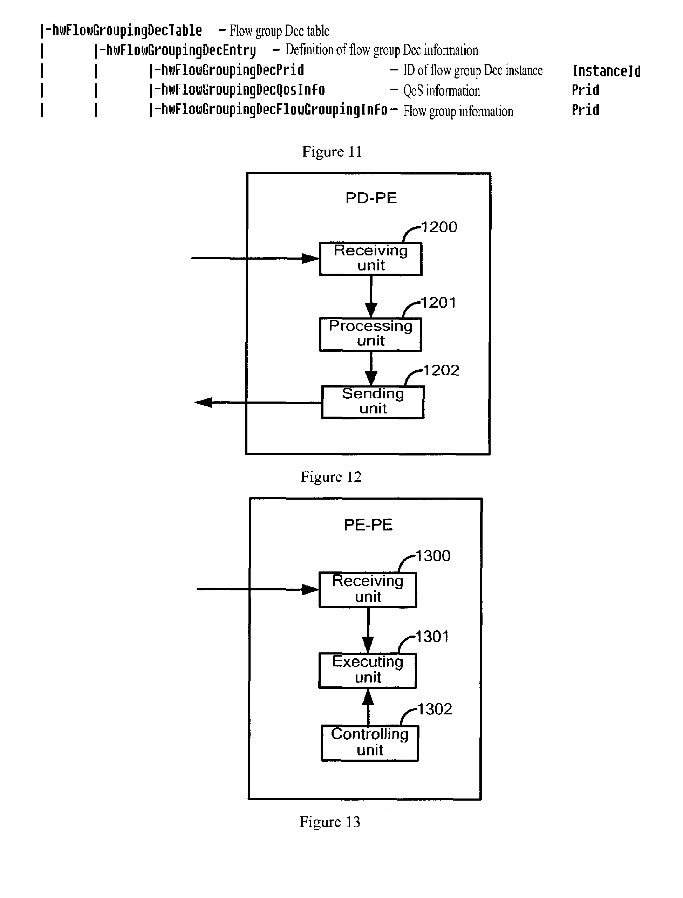

The embodiments of the present invention provide a PIB that carries a flow group QoS policy. As shown in Figure 11, the PIB includes the PRI number, the flow group QoS information, and the flow group information. The PD-PE500 uses the PIB shown in Figure 11 to carry the QoS policy of the QoS resources shared by each flow in a flow group and sends the QoS policy to the PE-PE701 through the Rw interface.

Specifically, as shown in Figure 12, a PD-PE provided in an embodiment of the present invention includes: a receiving unit 1200, a processing unit 1201, and a sending unit 1202. The receiving unit 1200 is configured to receive a resource allocation request carrying a flow group information; the processing unit 1201 is configured to determine, according to the received resource allocation request that carries the flow group information, the QoS resources required by a flow group, and enable the sending unit to send the QoS policy of the QoS resources shared by each flow in the flow group through a PIB of COPS-PR; and the sending unit 1202 is configured to send the QoS policy of the QoS resources shared by each flow in the flow group through a PIB of COPS-PR.

Further, the PE-PE501 allocates bearer(s) to flow(s) in the flow group according to the received QoS policy, and controls the resources occupied by the bearer(s) to be less than those required by the flow group that is contained in the PIB, so that the QoS policy of the QoS resources shared by each flow in the flow group (or, simply, the flow group QoS policy) is executed properly.

When the resources (such as bandwidth) required by some flows in the flow group change, the PE-PE501 automatically controls the resources occupied by the bearers of these flows according to the flow group QoS policy from the PD-PE500 and ensures that the resources occupied by all bearers do not exceed those of the flow group. For example, a flow group QoS policy specifies that a flow group includes both audio and video flows shares 384 kbit/s bandwidth. The PE-PE501 allocates 64 kbit/s bandwidth to audio flows and 320 kbit/s bandwidth to video flows according to the flow group QoS policy. When detecting that more bandwidth is needed for audio flows, the PE-PE501 properly increases the bandwidth for audio flows and decreases that for video flows correspondingly, for example, increases the bandwidth for audio flows to 128 kbit/s and decreases that for video flows to 256 kbit/s. If a flow group includes three or more flows, the PE-PE501 can adjust the resources occupied by the bearer(s) of some flows or all flows.

In this way, when the resources required by some flows change, the PE-PE501 has no need to request a new policy from the PD-PE500, thus realizing flexible control.

Figure 13 shows a PE-PE provided in an embodiment of the present invention, which includes: a receiving unit 1300, an executing unit 1302, and a controlling unit 1302. The receiving unit 1300 is configured to receive the QoS policy of the QoS resources shared by each flow in a flow group; the executing unit 1301 is configured to allocate bearer(s) to flow(s) in the flow group according to the received QoS policy; and the controlling unit 1302 is configured to control the QoS resources occupied by the bearer(s) allocated to all flows in the flow group to be less than those required by the flow group. In addition, the controlling unit 1302 is further configured to adjust automatically the QoS resources to each flow in the flow group.

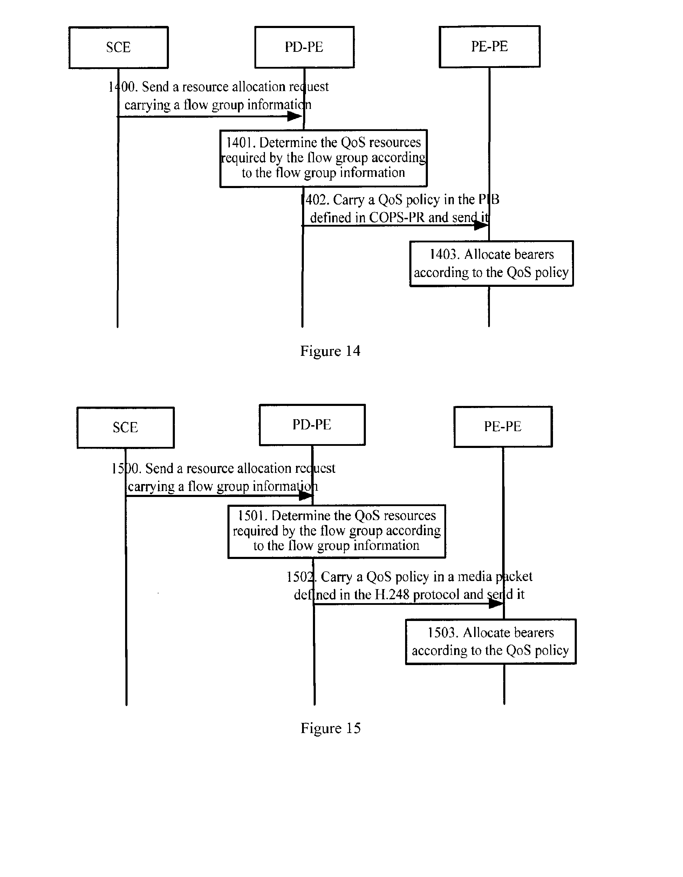

Figure 14 is a flowchart for the exchange of flow group control messages among the network entities when the Rw interface uses the COPS-PR protocol as the bearer protocol according to embodiments of the present invention, and the method includes:

Block 1400: The SCE sends a resource allocation request carrying a flow group information to the PD-PE.

Block 1401: Upon receiving the resource allocation request from the SCE, the PD-PE determines the QoS resources required by the flow group according to the flow group information. Specifically, compares the flow group information with local resources situation, and determines the QoS resources required by the flow group according to a preset QoS policy and the compared result.

Block 1402: The PD-PE describes a QoS policy of the QoS resources shared by each flow in the flow group by the PIB in COPS-PR and sends the PIB which carries the QoS policy and is defined in COPS-PR to the PE-PE for execution through the Rw interface.

Block 1403: Upon receiving the PIB which carries the QoS policy from the PD-PE, the PE-PE allocates bearers according to the QoS policy. Specifically, the PE-PE determines that the PIB (specifically PRI) includes the flow group information and allocates IP bearers to the mentioned flow group correspondingly.

In block 1403, the PE-PE may allocate one IP bearer to each flow or multiple flows in the flow group. The IP bearers allocated to the flows in the flow group share the QoS resources of the flow group.

In another implementation mode, the Rw interface may be based on the H.248 protocol when the PD-PE send the QoS policy of the QoS resources shared by each flow in the flow group to the PE-PE through the Rw interface. The media descriptors in the H.248 protocol are defined as follows:

```
        MediaDescriptor ::= SEQUENCE -definition of media descriptors
        {
           termStateDescr TerminationStateDescriptor OPTIONAL, -terminal status
           streams CHOICE
            {
               oneStream StreamParms, -a single stream
               multiStream SEQUENCE OF StreamDescriptor -multiple streams
           } OPTIONAL,
        ...
        }
        StreamDescriptor ::= SEQUENCE -definition of stream descriptors
        {
           streamID StreamID, -stream ID
           streamParms StreamParms -stream parameter
        }
        StreamParms ::= SEQUENCE -definition of stream parameters
        {
           localControlDescriptor LocalControlDescriptor OPTIONAL, -local control
                                                                          information
           localDescriptor LocalRemoteDescriptor OPTIONAL, -local information
           remoteDescriptor LocalRemoteDescriptor OPTIONAL, -peer information
        ... }
        LocalControlDescriptor ::= SEQUENCE -local control descriptor
        {
           streamMode StreamMode OPTIONAL, -stream mode
           reserveValue BOOLEAN OPTIONAL, -reserved value
           reserveGroup BOOLEAN OPTIONAL, -reserved group
           propertyParms SEQUENCE OF PropertyParm, -property parameter
        ... }
```

multiStream is defined as a sequence of flows, and the QoS parameters of each flow are contained in StreamParms. Thus, there is no relation among the flows. To enable the PD-PE to send the QoS policy of the QoS resources shared by each flow in the flow group to the PE-PE, embodiments of the present invention provide TerminationStateDescriptor, a terminal status descriptor in the extended H.248 protocol, which is defined as follows: TerminationStateDescriptor ::= SEQUENCE { propertyParms SEQUENCE OF PropertyParm, -property parameter eventBufferControl EventBufferControl OPTIONAL, -event buffer control serviceState ServiceState OPTIONAL, -service status attribute flowGroupValue BOOLEAN, -flow grouping switch ...}

TerminationStateDescriptor includes flowGroupValue attribute. When the flowGroupValue attribute is set to TRUE, flow grouping is enabled. In the case, if all media flows in a media packet structure belong to one flow group, the flow group information and the flow group QoS information (i.e. the QoS information of the flow group, for example, bandwidth b) are carried in the packet structure of the first flow in the media packet structure. The flow group QoS information is ignored if it is carried in the packet structure of any flow other than the first flow. Specially, when there is only one flow in the media packet structure, the flow group information and the QoS information of the flow are carried in the packet structure of the first flow in the media packet structure. When the flowGroupValue attribute is set to FALSE, the flow grouping is disabled. In this case, there is no relation among the flows. The flow group information and the QoS information of each flow (for example, bandwidth b) are carried in the respective packet structure of the each flow in the media packet structure.

The following shows an example of an H.248 packet that carries a flow group: MEGACO/1 [191.169.150.010]:2944 T-1{C=1{A-${ M { -media packet structure TS {FGV=TRUE}, -terminal status packet ,FGV is set to TRUE. ST=1{L{v=0c=IN IP4 191.169.150.10 b=CT:384000 m=audio 13388 RTP/AVP4}, -flow 1 ST=2{L{v=0 c=IN IP4 191.169.150.11 m=video 13389 RTP/AVP4}}}}}} -flow 2

Flow 1 carries the QoS policy in the case of 384 kbit/s bandwidth (parameter b). Because FGV is set to TRUE, i.e., the flow grouping is enabled, and flow 1 (audio flow) and flow 2 (video flow) share the bandwidth.

Figure 15 is a flowchart for the exchange of flow group control messages among the network entities when the Rw interface uses the H.248 protocol as the bearer protocol according to an embodiment of the present invention:

Block 1500: The SCE sends a resource allocation request carrying a flow group information to the PD-PE.

Block 1501: Upon receiving the resource allocation request from the SCE, the PD-PE determines the QoS resources required by the flow group according to the flow group information. Specifically, the PD-PE compares the flow group information with local resources situation, and determines the QoS resources required by the flow group according to a preset QoS policy and the compared result.

Block 1502: The PD-PE describes a QoS policy of the QoS resources shared by each flow in the flow group by a media packet structure in H.248, and sends an H.248 message including the media packet carrying the QoS policy to the PE-PE for execution through the Rw interface.

Block 1503: Upon receiving the H.248 message including the media packet carrying the QoS policy from the PD-PE, the PE-PE allocates bearers according to the QoS policy. Specifically, the PE-PE determines that the H.248 message includes the media packet carrying the flow group information and the QoS information, and allocates IP bearers to the mentioned flow group correspondingly.

Likewise, in block 1503, the PE-PE may allocate one IP bearer to each flow or multiple flows in the flow group. The IP bearers allocated to the flows in the flow group share the QoS resources of the flow group.

In addition, when the Rw interface uses the H.248 protocol as the bearer protocol, the architecture of the PD-PE and PE-PE are shown in Figure 12 and Figure 13 respectively. In this case, each unit processes the sent QoS policies according to the media packet structure defined in the H.248 protocol. The PE-PE automatically controls the resources allocated to each flow. The procedure is the same as that when the Rw interface uses the COPS-PR as the bearer protocol.

The Rw interface may also use other resource policy control protocols as the bearer protocols, so that the PD-PE can send the QoS policy of the QoS resources shared by each flow in a flow group to the PE-PE. The procedure is the same as that in the foregoing embodiments of the present invention.

In the foregoing embodiments of the present invention, a PD-PE sends a QoS policy of the QoS resources shared by each flow in a flow group to a PE-PE through an Rw interface, and the PE-PE allocates bearer(s) to flow(s) in the flow group according to the received QoS policy to implement the flow group QoS control in the entire NGN. Further, the PE-PE automatically adjusts the QoS resources occupied by bearer(s) according to the flow group QoS policy, during allocating the bearer(s) to flow(s) of the flow group. In this way, when resources of each flow change, the PE-PE does not need to request a new policy from the PD-PE, thus reducing the redundant interactions between the PE-PE and the PD-PE and making the control more flexible.

It is apparent that those skilled in the art can make various modifications and variations to the invention without departing from the scope of the invention. The invention is intended to cover the modifications and variations provided that they fall in the scope of protection defined by the following claims or their equivalents.

## Claims

1. A method for implementing flow group Quality of Service, QoS, control in a Next Generation Network, NGN, comprising:
receiving, by a Policy Decision Physical Entity, PD-PE, a resource allocation request that carries a requested flow group information from a Service Control Entity, SCE through a Rs interface, wherein the requested flow group information is configured to identify the features of a flow group (1400);
determining, by the PD-PE, according to the resource allocation request that carries the requested flow group information, QoS resources required by the flow group (1401, 1501); **characterized by** further comprising:
generating and sending, by the PD-PE, a QoS policy of the flow group to a Policy Enforcement Physical Entity, PE-PE, through a Rw interface, wherein the QoS policy of the flow group indicates that the QoS resources are shared by each flow in the flow group and comprises a decided flow group information and a QoS information of the flow group (1402, 1502), and wherein the decided flow group information comprises a filter rule, filter status, and service type of each flow from the flow group, so that the PE-PE allocates one or more bearers to one or more flows in the flow group according to the received QoS policy of the flow group and controls the resources occupied by the one or more bearers allocated to the one or more flows in the flow group to be less than the QoS resources required by the flow group (1403, 1503);
wherein the Rs interface is the interface between the SCE and the PD-PE, and the Rw interface is the interface between the PD-PE and the PE-PE.

2. The method according to claim 1, wherein the process of determining, by the PD-PE, according to the resource allocation request that carries the requested flow group information, the QoS resources required by a flow group comprises:
comparing, by the PD-PE, the requested flow group information with local resources situation; and
determin ing by the PD-PE, the QoS resources required by the flow group according to a preset QoS policy and the compared result.

3. The method according to claim 1, wherein the process of allocating one or more bearers to one or more flows in the flow group comprises:
allocating, by the PE-PE, one bearer to each flow in the flow group respectively; or
allocating, by the PE-PE, one bearer to multiple flows in the flow group.

4. The method according to claim 1, further comprising:
adjusting, by the PE-PE, according to the QoS policy of the flow group, resources occupied by the corresponding bearer allocated to the flow in the flow group, when detecting that the resources required by the flow in the flow group change.

5. The method according to any one of claims 1 to 4, wherein the process of sending, by the PD-PE, a QoS policy of the flow group comprises:
Sending, by the PD-PE, the QoS policy of the flow group based on a Common Open Policy Service Usage for Policy Provisioning, COPS-PR protocol, or a H.248 protocol, wherein the QoS policy of the flow group indicates that the QoS resources are shared by each flow in the flow group.

6. The method according to claim 5, wherein the decided flow group information and the QoS information of the flow group is carried in a Policy Information Base, PIB, mode when the PD-PE sends the QoS policy of the flow group based on the COPS-PR protocol.

7. The method according to claim 5, wherein the decided flow group information and the QoS information of the flow group is carried in a media packet which comprise a flowGroupValue attribute when the PD-PE sends the QoS policy of the flow group based on the H.248 protocol.

8. The method according to claim 7, wherein:
the QoS information of the flow group is carried in the packet structure of a first flow in the media packet, when the flowGroupValue attribute is set to TRUE; and
the QoS information of each flow is carried respectively in the packet structure of the each flow in the media packet, when the flowGroupValue attribute is set to FALSE.

9. A Policy Decision Physical Entity, PD-PE, used in a Next Generation Network, NGN, comprising:
a receiving unit, configured to receive the resource allocation requests carrying a requested flow group information from a Service Control Entity, SCE through a Rs interface, wherein the requested flow group information is configured to identify the features of a flow group;
a processing unit, configured to determine, according to the received resource allocation request that carries the requested flow group information, Quality of Service, QoS, resources required by the flow group, **characterized by**:
the processing unit is further configured to generate a QoS policy of the flow group, wherein the QoS policy of the flow group indicates that the QoS resources are shared by each flow in the flow group and comprises a decided flow group information and a QoS information of the flow group, and wherein the decided flow group information comprises a filter rule, filter status, and service type of each flow from the flow group; and further comprising
a sending unit, configured to send the QoS policy of the flow group to a Policy Enforcement Physical Entity, PE-PE through a Rw interface;
wherein the Rs interface is the interface between the SCE and the PD-PE, and the Rw interface is the interface between the PD-PE and the PE-PE.

10. A Policy Enforcement Physical Entity, PE-PE, used in a Next Generation Network, NGN, **characterized by** comprising:
a receiving unit, configured to receive a Quality of Service, QoS, policy of a flow group from a Policy Decision Physical Entity, PD-PE through a Rw interface, wherein the QoS policy of the flow group indicates that QoS resources are shared by each flow in the flow group and comprises a decided flow group information and a QoS information of the flow group, and wherein the decided flow group information comprises a filter rule, filter status, and service type of each flow from the flow group;
an executing unit, configured to allocate one or more bearers to one or more flows in the flow group according to the received QoS policy of the flow group; and
a controlling unit, configured to control the resources occupied by the one or more bearers allocated to the one or more flows in the flow group to be less than the QoS resources required by the flow group;
wherein the Rw interface is the interface between the PD-PE and the PE-PE.

11. The PE-PE according to claim 10, wherein the controlling unit is further configured to adjust, according to the QoS policy of the flow group, resources occupied by the corresponding bearer allocated to the flow in the flow group, when detecting that the resources required by the flow in the flow group change.

12. A network system, **characterized by** comprising:
a Policy Decision Physical Entity, PD-PE according to claim 9; and
a Policy Enforcement Physical Entity, PE-PE according to claim 10 or 11.

## Patentansprüche

1. Verfahren zum Implementieren einer Flussgruppen-Dienstqualitätssteuerung (flow group Quality of Service control, Flussgruppen-QoS-Steuerung) in einem Netz der nächsten Generation (Next Generation Network, NGN) wobei das Verfahren Folgendes umfasst:
Empfangen einer Betriebsmittelzuweisungsanforderung, die angeforderte Flussgruppen-Informationen führt, von einer Dienststeuerentität (Service Control Entity, SCE) durch eine Rs-Schnittstelle durch eine physikalische Strategieentscheidungsentität (Policy Decision Physical Entity, PD-PE) wobei die angeforderten Flussgruppen-Informationen konfiguriert sind, die Merkmale einer Flussgruppe zu identifizieren (1400);
Bestimmen gemäß der Betriebsmittelzuweisungsanforderung, die die angeforderten Flussgruppen-Informationen führt, durch die PD-PE der durch die Flussgruppe benötigten QoS-Betriebsmittel (1401, 1501); **dadurch gekennzeichnet, dass** das Verfahren ferner Folgendes umfasst:
Erzeugen und Senden einer QoS-Strategie der Flussgruppe an eine physikalische Strategiedurchsetzungsentität (Policy Enforcement Physical Entity, PE-PE) durch eine Rw-Schnittstelle durch die PD-PE, wobei die QoS-Strategie der Flussgruppe angibt, dass die QoS-Betriebsmittel durch jeden Fluss in der Flussgruppe gemeinsam benutzt werden, und bestimmte Flussgruppen-Informationen und QoS-Informationen der Flussgruppe umfasst (1402, 1502), und wobei die bestimmten Flussgruppen-Informationen eine Filterregel, einen Filterstatus und einen Diensttyp jedes Flusses aus der Flussgruppe umfassen, so dass die PE-PE einen oder mehrere Träger einem oder mehreren Flüssen in der Flussgruppe gemäß der empfangenen QoS-Strategie der Flussgruppe zuweist und die Betriebsmittel, die durch den einen oder die mehreren Träger, die dem einen oder den mehreren Flüssen in der Flussgruppe zugewiesen sind, in Anspruch genommen werden, steuert, damit sie weniger als die QoS-Betriebsmittel sind, die durch die Flussgruppe benötigt werden (1403, 1503);
wobei die Rs-Schnittstelle die Schnittstelle zwischen der SCE und der PD-PE ist und
die Rw-Schnittstelle die Schnittstelle zwischen der PD-PE und der PE-PE ist.

2. Verfahren nach Anspruch 1, wobei der Prozess des Bestimmens gemäß der Betriebsmittelzuweisungsanforderung, die die angeforderten Flussgruppen-Informationen führt, durch die PD-PE der durch eine Flussgruppe benötigten QoS-Betriebsmittel Folgendes umfasst:
Vergleichen der angeforderten Flussgruppen-Informationen mit der Situation der lokalen Betriebsmittel durch die PD-PE; und
Bestimmen der durch die Flussgruppe benötigten QoS-Betriebsmittel gemäß einer vorgegebenen QoS-Strategie und dem Vergleichsergebnis durch die PD-PE.

3. Verfahren nach Anspruch 1, wobei der Prozess des Zuweisens eines oder mehrerer Träger zu einem oder mehreren Flüssen in der Flussgruppe Folgendes umfasst:
Zuweisen eines Trägers jeweils zu jedem Fluss in der Flussgruppe durch die PE-PE;
oder
Zuweisen eines Trägers zu mehreren Flüssen in der Flussgruppe durch die PE-PE.

4. Verfahren nach Anspruch 1, das ferner Folgendes umfasst:
Einstellen gemäß der QoS-Strategie der Flussgruppe durch die PE-PE der Betriebsmittel, die durch den entsprechenden Träger, der dem Fluss in der Flussgruppe zugewiesen ist, in Anspruch genommenen werden, wenn detektiert wird,
dass sich die durch den Fluss in der Flussgruppe benötigten Betriebsmittel ändern.

5. Verfahren nach einem der Ansprüche 1 bis 4, wobei der Prozess des Sendens einer QoS-Strategie der Flussgruppe durch die PD-PE Folgendes umfasst:
Senden der QoS-Strategie der Flussgruppe basierend auf einem Protokoll einer gemeinsamen offenen Strategiedienstverwendung für die Strategiebereitstellung (Common Open Policy Service Usage for Policy Provisioning protocol, COPS-PR-Protokoll) oder einem H.248-Protokoll durch die PD-PE, wobei die QoS-Strategie für die Flussgruppe angibt, dass die QoS-Betriebsmittel durch jeden Fluss in der Flussgruppe gemeinsam benutzt werden.

6. Verfahren nach Anspruch 5, wobei die bestimmten Flussgruppen-Informationen und die QoS-Informationen der Flussgruppe in einer Strategieinformationsbasis-Betriebsart (Policy Information Base mode, PIB-Betriebsart) geführt werden, wenn die PD-PE die QoS-Strategie der Flussgruppe auf dem COPS-PR-Protokoll basierend sendet.

7. Verfahren nach Anspruch 5, wobei die bestimmten Flussgruppen-Informationen und die QoS-Informationen der Flussgruppe in einem Medienpaket geführt werden, das ein "flowGroupValue"-Attribut umfasst, wenn die PD-PE die QoS-Strategie der Flussgruppe auf dem H.248-Protokoll basierend sendet.

8. Verfahren nach Anspruch 7, wobei:
die QoS-Informationen der Flussgruppe in der Paketstruktur eines ersten Flusses in dem Medienpaket geführt werden, wenn das "flowGroupValue"-Attribut auf WAHR gesetzt ist; und
die QoS-Informationen jedes Flusses jeweils in der Paketstruktur jedes Flusses in dem Medienpaket geführt werden, wenn das "flowGroupValue"-Attribut auf FALSCH gesetzt ist.

9. Physikalische Strategieentscheidungsentität, PD-PE, die in einem Netz der nächsten Generation, NGN, verwendet wird, die Folgendes umfasst:
eine Empfangseinheit, die konfiguriert ist, die Betriebsmittelzuweisungsanforderungen, die angeforderte Flussgruppen-Informationen führen, von einer Dienststeuerentität, SCE, durch eine Rs-Schnittstelle zu empfangen, wobei die angeforderten Flussgruppen-Informationen konfiguriert sind, die Merkmale einer Flussgruppe zu identifizieren;
eine Verarbeitungseinheit, die konfiguriert ist, gemäß der empfangenen Betriebsmittelzuweisungsanforderung, die die angeforderten Flussgruppen-Informationen führt, die durch die Flussgruppe benötigten Dienstqualitäts-Betriebsmittel, QoS-Betriebsmittel, zu bestimmen; **dadurch gekennzeichnet, dass**:
die Verarbeitungseinheit ferner konfiguriert ist, eine QoS-Strategie der Flussgruppe zu erzeugen, wobei die QoS-Strategie der Flussgruppe angibt, dass die QoS-Betriebsmittel durch jeden Fluss in der Flussgruppe gemeinsam benutzt werden, und
bestimmte Flussgruppen-Informationen und QoS-Informationen der Flussgruppe umfasst, und wobei die bestimmten Flussgruppen-Informationen eine Filterregel,
einen Filterstatus und einen Diensttyp jedes Flusses aus der Flussgruppe umfassen;
und dass die PD-PE ferner Folgendes umfasst:
eine Sendeeinheit, die konfiguriert ist, die QoS-Strategie der Flussgruppe durch eine Rw-Schnittstelle an eine physikalische Strategiedurchsetzungsentität, PE-PE, zu senden;
wobei die Rs-Schnittstelle die Schnittstelle zwischen der SCE und der PD-PE ist und
die Rw-Schnittstelle die Schnittstelle zwischen der PD-PE und der PE-PE ist.

10. Physikalische Strategiedurchsetzungsentität, PE-PE, die in einem Netz der nächsten Generation, NGN, verwendet wird, **dadurch gekennzeichnet, dass** sie Folgendes umfasst:
eine Empfangseinheit, die konfiguriert ist, eine Dienstqualitätsstrategie, QoS-Strategie, einer Flussgruppe durch eine Rw-Schnittstelle von einer physikalischen Strategieentscheidungsentität, PD-PE, zu empfangen, wobei die QoS-Strategie der Flussgruppe angibt, dass die QoS-Betriebsmittel durch jeden Fluss in der Flussgruppe gemeinsam benutzt werden, und bestimmte Flussgruppen-Informationen und QoS-Informationen der Flussgruppe umfasst, und wobei die bestimmten Flussgruppen-Informationen eine Filterregel, einen Filterstatus und einen Diensttyp jedes Flusses aus der Flussgruppe umfassen;
eine Ausführungseinheit, die konfiguriert ist, einen oder mehrere Träger einem oder
mehreren Flüssen in der Flussgruppe gemäß der empfangenen QoS-Strategie der Flussgruppe zuzuweisen; und
eine Steuereinheit, die konfiguriert ist, die Betriebsmittel, die durch den einen oder
die mehreren Träger, die dem einen oder den mehreren Flüssen in der Flussgruppe zugewiesen sind, in Anspruch genommen werden, zu steuern, damit sie weniger als die durch die Flussgruppe benötigten QoS-Betriebsmittel sind;
wobei die Rw-Schnittstelle die Schnittstelle zwischen der PD-PE und der PE-PE ist.

11. PE-PE nach Anspruch 10, wobei die Steuereinheit ferner konfiguriert ist, gemäß der QoS-Strategie der Flussgruppe die Betriebsmittel, die durch den entsprechenden Träger, der dem Fluss in der Flussgruppe zugewiesen ist, in Anspruch genommenen werden, einzustellen, wenn detektiert wird, dass sich die durch den Fluss in der Flussgruppe benötigten Betriebsmittel ändern.

12. Netzsystem, **dadurch gekennzeichnet, dass** es Folgendes umfasst:
eine physikalische Strategieentscheidungsentität, PD-PE, nach Anspruch 9; und
eine physikalische Strategiedurchsetzungsentität, PE-PE, nach Anspruch 10 oder 11.

## Revendications

1. Procédé pour la mise en oeuvre d'un contrôle de qualité de service, QoS (Quality of Service), de groupes de flux dans un réseau de nouvelle génération, NGN (Next Generation Network), comprenant :
la réception, par une entité physique de décision de politique, PD-PE (Policy Decision Physical Entity), d'une demande d'allocation de ressources qui achemine une information de groupe de flux demandée en provenance d'une entité de contrôle de service, SCE (Service Control Entity), par l'intermédiaire d'une interface Rs, dans lequel l'information de groupe de flux demandée est configurée pour identifier les caractéristiques d'un groupe de flux (1400) ;
la détermination, par la PD-PE, conformément à la demande d'allocation de ressources qui achemine l'information de groupe de flux demandée, de ressources de QoS exigées par le groupe de flux (1401, 1501) ; **caractérisé en ce qu'**il comprend en outre :
la génération et l'envoi, par la PD-PE, d'une politique de QoS du groupe de flux à une entité physique de mise en application de politique, PE-PE (Policy Enforcement Physical Entity), par l'intermédiaire d'une interface Rw, dans lequel la politique de QoS du groupe de flux indique que les ressources de QoS sont partagées par chaque flux dans le groupe de flux et comprend une information de groupe de flux décidée et
une information de QoS du groupe de flux (1402, 1502), et dans lequel l'information de groupe de flux décidée comprend une règle de filtre, un état du filtre et un type de service de chaque flux provenant du groupe de flux de manière à ce que la PE-PE alloue un ou plusieurs supports à un ou plusieurs flux dans le groupe de flux conformément à la politique de QoS reçue du groupe de flux et contrôle les ressources occupées par lesdits un ou plusieurs supports alloués auxdits un ou
plusieurs flux dans le groupe de flux afin qu'elles soient inférieures aux ressources de QoS exigées par le groupe de flux (1403, 1503) ;
dans lequel l'interface Rs est l'interface entre la SCE et la PD-PE, et l'interface Rw est l'interface entre la PD-PE et la PE-PE.

2. Procédé selon la revendication 1, dans lequel le processus de détermination, par la PD-PE, conformément à la demande d'allocation de ressources qui achemine l'information de groupe de flux demandée, des ressources de QoS exigées par un groupe de flux comprend :
la comparaison, par la PD-PE, de l'information de groupe de flux demandée à une situation de ressources locales ; et
la détermination, par la PD-PE, des ressources de QoS exigées par le groupe de flux conformément à une politique de QoS prédéfinie et au résultat de comparaison.

3. Procédé selon la revendication 1, dans lequel le processus d'allocation d'un ou plusieurs supports à un ou plusieurs flux dans le groupe de flux comprend :
l'allocation, par la PE-PE, d'un support à chaque flux dans le groupe de flux,
respectivement ; ou
l'allocation, par la PE-PE, d'un support à de multiples flux dans le groupe de flux.

4. Procédé selon la revendication 1, comprenant en outre :
l'ajustement, par la PE-PE, conformément à la politique de QoS du groupe de flux, de ressources occupées par le support correspondant alloué au flux dans le groupe de flux, lorsqu'il a été détecté que les ressources exigées par le flux dans le groupe de flux varient.

5. Procédé selon l'une quelconque des revendications 1 à 4, dans lequel le processus d'envoi, par la PD-PE, d'une politique de QoS du groupe de flux comprend :
l'envoi, par la PD-PE, de la politique de QoS du groupe de flux sur la base d'un protocole d'usage de services de politique ouverts communs pour le déploiement de politiques, COPS-PR (Common Open Policy Service Usage for Policy Provisioning),
ou d'un protocole H.248, dans lequel la politique de QoS du groupe de flux indique que les ressources de QoS sont partagées par chaque flux dans le groupe de flux.

6. Procédé selon la revendication 5, dans lequel l'information de groupe de flux décidée et l'information de QoS du groupe de flux sont acheminées dans un mode de base d'informations de politique, PIB (Policy Information Base), lorsque la PD-PE envoie la politique de QoS du groupe de flux sur la base du protocole COPS-PR.

7. Procédé selon la revendication 5, dans lequel l'information de groupe de flux décidée et l'information de QoS du groupe de flux sont acheminées dans un paquet multimédia qui comprend un attribut de valeur flowGroup (groupe de flux) lorsque la PD-PE envoie la politique de QoS du groupe de flux sur la base du protocole H.248.

8. Procédé selon la revendication 7, dans lequel :
l'information de QoS du groupe de flux est acheminée dans la structure de paquet d'un premier flux dans le paquet multimédia lorsque l'attribut de valeur flowGroup est réglé sur VRAI ; et
l'information de QoS de chaque flux est respectivement acheminée dans la structure de paquet de chaque flux dans le paquet multimédia lorsque l'attribut de valeur flowGroup est réglé sur FAUX.

9. Entité physique de décision de politique, PD-PE, utilisée dans un réseau de nouvelle génération, NGN, comprenant :
une unité de réception, configurée pour recevoir les demandes d'allocations de ressources acheminant une information de groupe de flux demandée en provenance d'une entité de contrôle de service, SCE, par l'intermédiaire d'une interface Rs, dans laquelle l'information de groupe de flux demandée est configurée pour identifier les caractéristiques d'un groupe de flux ;
une unité de traitement, configurée pour déterminer, conformément à la demande d'allocation de ressources reçue qui achemine l'information de groupe de flux demandée, des ressources de qualité de service, QoS, exigées par le groupe de flux,
**caractérisée en ce que** :
l'unité de traitement est en outre configurée pour générer une politique de QoS du groupe de flux, dans laquelle la politique de QoS du groupe de flux indique que les ressources de QoS sont partagées par chaque flux dans le groupe de flux et comprend une information de groupe de flux décidée et une information de QoS du groupe de flux, et dans laquelle l'information de groupe de flux décidée comprend une règle de filtre, un état du filtre et un type de service de chaque flux provenant du groupe de flux ; et comprenant en outre :
une unité d'envoi, configurée pour envoyer la politique du QoS du groupe de flux à une entité physique de mise en application de politique, PE-PE, par l'intermédiaire d'une interface Rw ;
dans laquelle l'interface Rs est l'interface entre la SCE et la PD-PE, et l'interface Rw est l'interface entre la PD-PE et la PE-PE.

10. Entité physique de mise en application de politique, PE-PE, utilisée dans un réseau de nouvelle génération, NGN, **caractérisée en ce qu'**elle comprend :
une unité de réception, configurée pour recevoir une politique de qualité de service, QoS, d'un groupe de flux en provenance d'une entité physique de décision de politique, PD-PE, par l'intermédiaire d'une interface Rw, dans laquelle la politique de QoS du groupe de flux indique que les ressources de QoS sont partagées par chaque flux dans le groupe de flux et comprend une information de groupe de flux décidée et
une information de QoS du groupe de flux, et dans laquelle l'information de groupe de flux décidée comprend une règle de filtre, un état du filtre et un type de service de chaque flux provenant du groupe de flux ;
une unité d'exécution, configurée pour allouer un ou plusieurs supports à un ou
plusieurs flux dans le groupe de flux conformément à la politique de QoS reçue du groupe de flux ; et
une unité de contrôle, configurée pour contrôler les ressources occupées par lesdits un ou plusieurs flux dans le groupe de flux afin qu'elles soient inférieures aux ressources de QoS exigées par le groupe de flux ;
dans laquelle l'interface Rw est l'interface entre la PD-PE et la PE-PE.

11. Entité PE-PE selon la revendication 10, dans laquelle l'unité de commande est en outre configurée pour ajuster, conformément à la politique de QoS du groupe de flux, des ressources occupées par le support correspondant alloué au flux dans le groupe de flux lorsqu'il est détecté que les ressources exigées par le flux dans le groupe de flux varient.

12. Système de réseau, **caractérisé en ce qu'**il comprend :
une entité physique de décision de politique, PD-PE, selon la revendication 9 ; et
une entité physique de mise en application de politique, PE-PE, selon la revendication 10 ou 11.
